# EUROPÄISCHE PATENTSCHRIFT

(11) **EP 1 281 901 B1**
(45) Veröffentlichungstag und Bekanntmachung des Hinweises auf die Patenterteilung: **01.02.2006**
(21) Anmeldenummer: 02011897.2
(22) Anmeldetag: 29.05.2002
(51) Int. Cl.: F16K 31/42, F16K 31/122, F15B 13/042

(54) **Vorrichtung zur pneumatischen Steuerung**
Pneumatic controller
Régulateur pneumatique

(30) Priorität: 29.06.2001 DE 10131556
(43) Veröffentlichungstag der Anmeldung: 05.02.2003
(73) Patentinhaber: SIG Corpoplast GmbH & Co. KG, 22145 Hamburg (DE)
(72) Erfinder: Litzenberg, Michael, 21502 Geesthacht (DE); Vogel, Klaus, 22885 Barsb-ttel (DE)
(74) Vertreter: Klickow, Hans-Henning

(56) Entgegenhaltungen:
- WO-A-99/66250
- DE-A- 4 208 298
- DE-A- 19 956 575
- US-A- 3 155 367
- US-A- 4 018 418
- US-A- 4 644 969

## Beschreibung

Die Erfindung betrifft eine Vorrichtung zur pneumatischen Steuerung eines Blasdruckes bei der Herstellung von blasgeformten Behältern aus einem thermoplastischen Material, die einen in einem Zylinder geführten Steuerkolben aufweist, der in Richtung einer Kolbenlängsachse verschieblich gelagert ist und bei der durch den Zylinder hindurch ein vom Steuerkolben verschließbarer Hauptströmungsweg verläuft sowie bei der der Steuerkolben mit einer Steuerfläche versehen ist, die einem Steuerraum des Zylinders zugewandt ist und die zur Übertragung einer Steuerkraft auf den Steuerkolben ausgebildet ist.

Derartige vorrichtungen werden bei der Herstellung von blasgeformten Behältern eingesetzt, um eine mit der Durchführung des Blasvorganges koordinierte Zuleitung eines oder mehrerer Blasdrücke durchführen zu können.

Bei einer derartigen Behälterformung durch Blasdruckeinwirkung werden vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die für die Blasluftzuführung der Blasstation eingesetzten Vorrichtungen zur pneumatischen Steuerung sind typischerweise als Hochdruckventile realisiert, bei denen ein Steuerkolben von einem Steuerdruck derart positioniert wird, daß der Steuerkolben entweder einen Strömungsweg für den Blasdruck verschließt oder diesen freigibt. Zur Gewährleistung einer ausreichenden Abdichtung sind die bekannten Steuerkolben im Bereich einer Dichtfläche üblicherweise mit einem Elastomer vulkanisiert.

Nachteilig bei den bekannten Steuerkolben ist es insbesondere, daß konstruktiv ein erforderlicher Steuerdruck für die Zuhaltung des Ventils unterschiedlich zu einem Steuerdruck für ein Schließen des Ventils vorgegeben ist. Dies resultiert daraus, daß vom Hauptdruck in einem geschlossen Zustand und in einem geöffneten Zustand des Ventils unterschiedlich große Flächen des Steuerkolbens beaufschlagt werden.

In der US 4,018,418 wird eine Vorrichtung zur pneumatischen Steuerung beschrieben, bei der eine Ventilfunktion durch einen Steuerkolben ausgeübt wird, der in Richtung einer Kolbenlängsachse in einem Zylinder verschieblich gelagert ist. Durch den Zylinder hindurch verläuft ein vom Steuerkolben verschließbarer Hauptströmweg. Der Steuerkolben ist mit einem Kolbenschaft versehen, dessen Querschnittfläche im wesentlichen gleich einer Querschnittfläche einer vom Steuerkolben verschließbaren Durchströmungsfläche eines Hauptströmungsweges dimensioniert ist.

In der US-A-4,644,969 wird eine Ventilanordnung zur Steuerung einer Wasserströmung beschrieben, bei der das Ventil druckluftbetätigt ist. Der Kolben ist aus Kunststoff ausgebildet.

In der DE-A-199 56 575 wird ein pneumatisch betätigtes Hochdruckventil für aggressive Medien beschrieben. Zur Bereitstellung einer ausreichenden Beständigkeit gegenüber einer Einwirkung der aggressiven Medien liegt eine mindestens bereichsweise Ausbildung aus Kunststoff vor.

Aufgabe der vorliegenden Erfindung ist es, eine Vorrichtung der einleitend genannten Art derart zu konstruieren, daß die Schaltcharakteristik verbessert wird.

Diese Aufgabe wird erfindungsgemäß durch die Merkmale des kennzeichnenden Teils des Anspruchs 1 gelöst.

Durch die im wesentlichen gleichgroße Dimensionierung der Querschnittfläche des Kolbenschaftes und der Durchströmungsfläche des Hauptströmungsweges im Bereich der Abdichtung durch den Steuerkolben kann erreicht werden, daß die zum Schließen des pneumatischen Ventils erforderlichen Kräfte etwa in der gleichen Größenordnung liegen, wie die Kräfte für das Zuhalten des Ventils in der Verschlußstellung. Durch diese Dimensionierung ist es möglich, den maximalen Steuerdruck wesentlich zu reduzieren und hierdurch sowohl eine deutliche Reduzierung der Schaltzeiten als auch eine deutliche Verlängerung der Funktionsfähigkeit zu erreichen. Die Verringerung des Steuerdruckes führt zusätzlich zu einer Geräuschverringerung, so daß in gerätetechnischer Hinsicht geringer dimensionierte und somit preiswertere Schalldämpfer eingesetzt werden können.

Eine einfache Montierbarkeit wird dadurch unterstützt, daß der Steuerkolben mindestens zweiteilig ausgebildet ist.

Insbesondere ist bei einer mehrteiligen Realisierung des Steuerkolbens daran gedacht, daß der Steuerkolben eine Schaftkappe aufweist.

Ein einfaches Zusammensetzen der einzelnen Bauteile des Steuerkolbens kann dadurch erreicht werden, daß die Schaftkappe über eine Schnappverbindung im Bereich eines Kolbenschaftes des Steuerkolbens befestigt ist.

Insbesondere wird eine sichere Arretierung der Schaftkappe dadurch erreicht, daß der Kolbenschaft eine Nut zur Halterung der Schaftkappe aufweist. Es ist aber auch möglich, den Kolbenschaft mit einem Außenprofil zu versehen, das in ein entsprechendes Gegenprofil der Schaftkappe eingreift.

Eine formschlüssige Befestigung der Schaftkappe wird auch dadurch unterstützt, daß die Schaftkappe mit einem Steg in die Nut eingreift. Alternativ kann auch die Schaftkappe mit einer Nut versehen sein, in die ein korrespondierender Steg eingreift.

Zur Vermeidung von aufvulkanisierten Dichtungen wird vorgeschlagen, daß die Schaftkappe mindestens bereichsweise aus Kunststoff ausgebildet ist.

Besonders günstige Materialeigenschaften können dadurch erreicht werden, daß die Schaftkappe mindestens bereichsweise aus PETP ausgebildet ist.

Zur Verbesserung der Dichtigkeit wird vorgeschlagen, daß im Bereich des Kolbenschaftes mindestens eine Dichtung angeordnet ist.

Zur Unterstützung einer Verwendung von relativ kleinen Steuerdrücken ist vorgesehen, daß die Steuerfläche größer als die Querschnittfläche des Kolbenschaftes dimensioniert ist.

Für eine kompakte konstruktive Realisierung erweist es sich als vorteilhaft, daß die Steuerfläche im Bereich eines der Schaftkappe abgewandt angeordneten Kolbenkopfes positioniert ist.

Zur Vermeidung von Druckverlusten trägt es ebenfalls bei, daß der Kolbenkopf mit mindestens einer Dichtung versehen ist.

Gemäß einer Ausführungsform der Erfindung ist daran gedacht, daß sowohl der Kolbenschaft als auch der Kolbenkopf mindestens bereichsweise aus Metall ausgebildet sind.

Die Verwendung spezieller Führungsbänder am Steuerkolben kann dadurch vermieden werden, daß sowohl der Kolbenschaft als auch der Kolbenkopf mindestens bereichsweise aus Kunststoff ausgebildet sind.

Besonders günstige Materialeigenschaften können dadurch erreicht werden, daß sowohl der Kolbenschaft als auch der Kolbenkopf mindestens bereichsweise aus PETP ausgebildet sind.

Zur Unterstützung einer Erzeugung der Verstellkraft für den Steuerkolben wird vorgeschlagen, daß von der Steuerfläche mindestens bereichsweise ein Steuerraum zur Zuleitung eines Steuerdruckes begrenzt ist.

Insbesondere bei einer metallischen Realisierung des Steuerkolbens ist daran gedacht, daß der Steuerkolben als Anschlagdämpfung mit einem Dämpfungselement versehen ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus vorformlingen,
- Fig. 2: einen Längsschnitt durch eine Blasform, in der ein vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: einen schematischen Vertikalschnitt durch ein Hochdruckventil,
- Fig. 6:: eine schematische Darstellung eines Steuerkolbens aus Kunststoff, der im Steuerzylinder geführt ist
und
- Fig. 7:: eine Prinzipdarstellung eines zweiteiligen Steuerkolbens, der mit einem Kolbenschaft in einer Hülse geführt ist.

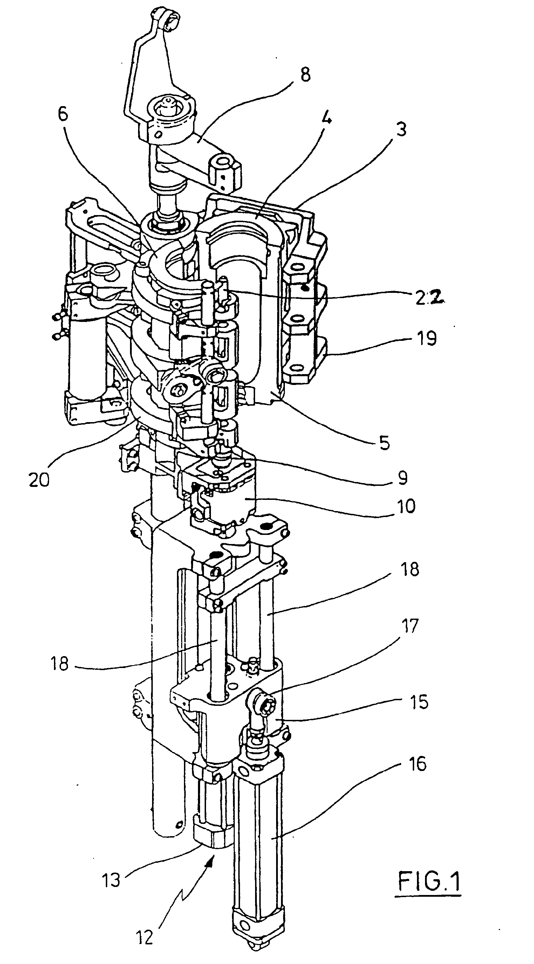

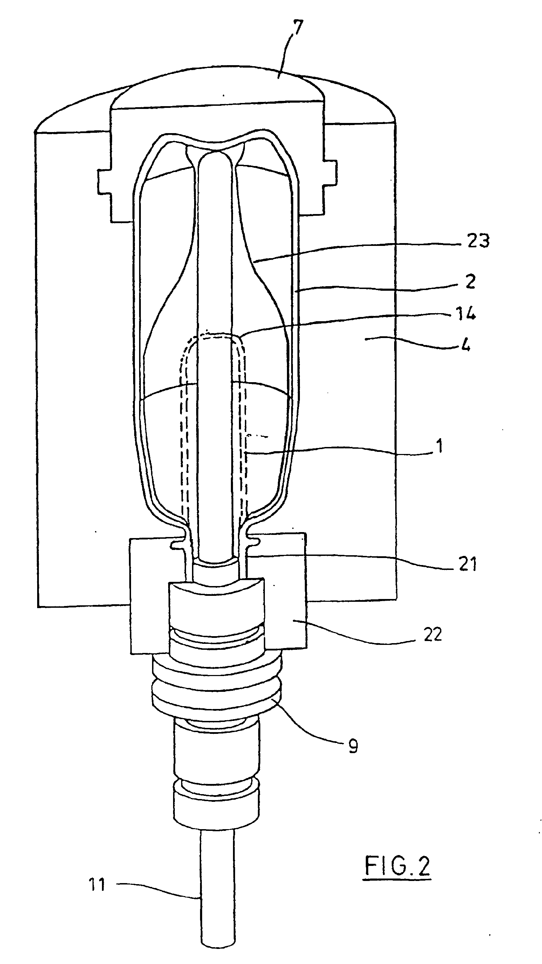

Eine Verwendung der Vorrichtung zur pneumatischen Steuerung kann beispielsweise zur Steuerung der Blasluftzuführung bei einer Vorrichtung zur Blasformung erfolgen. Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19) angeordneten Formhälften (5, 6) erfolgt eine Verriegelung der Träger (19) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

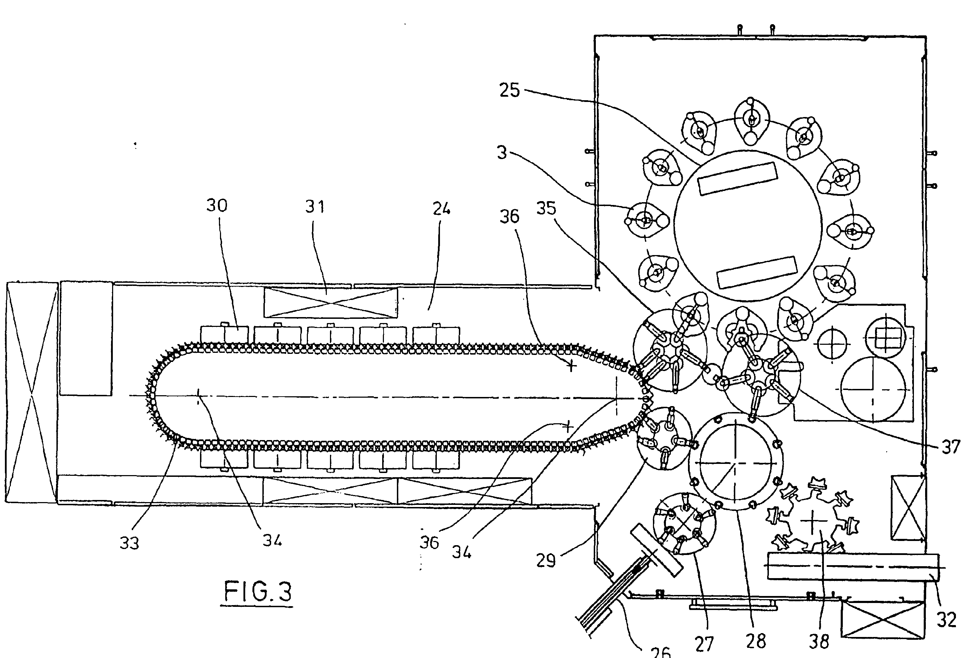

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange verwendungsfähigkeit von innerhalb des Behälters (2) abgefüllten Lebensmitteln, insbesondere von Getränken, gewährleisten, müssen spezielle verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

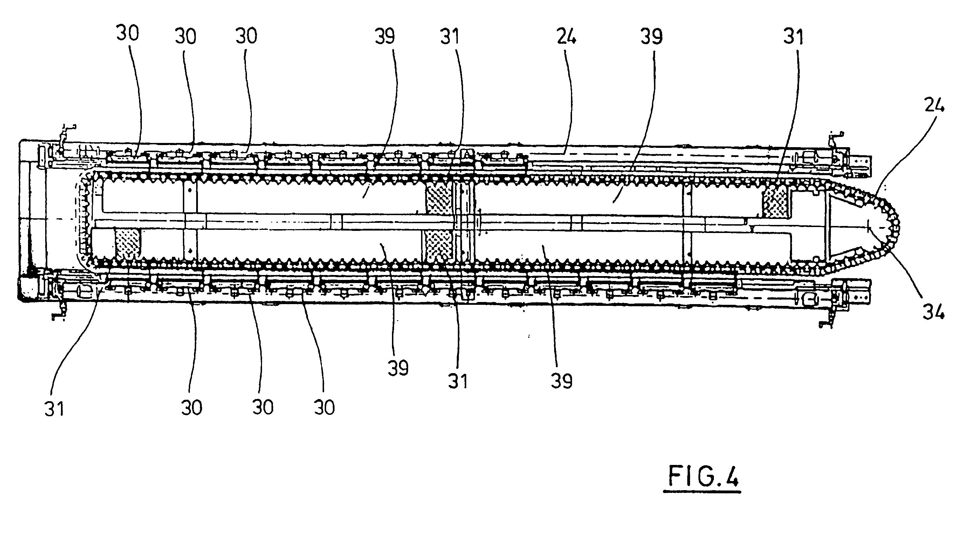

In der in Fig. 4 dargestellten modifizierten Heizstrecke (24) können durch die größere Anzahl von Heizstrahlern (30) eine größere Menge von vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

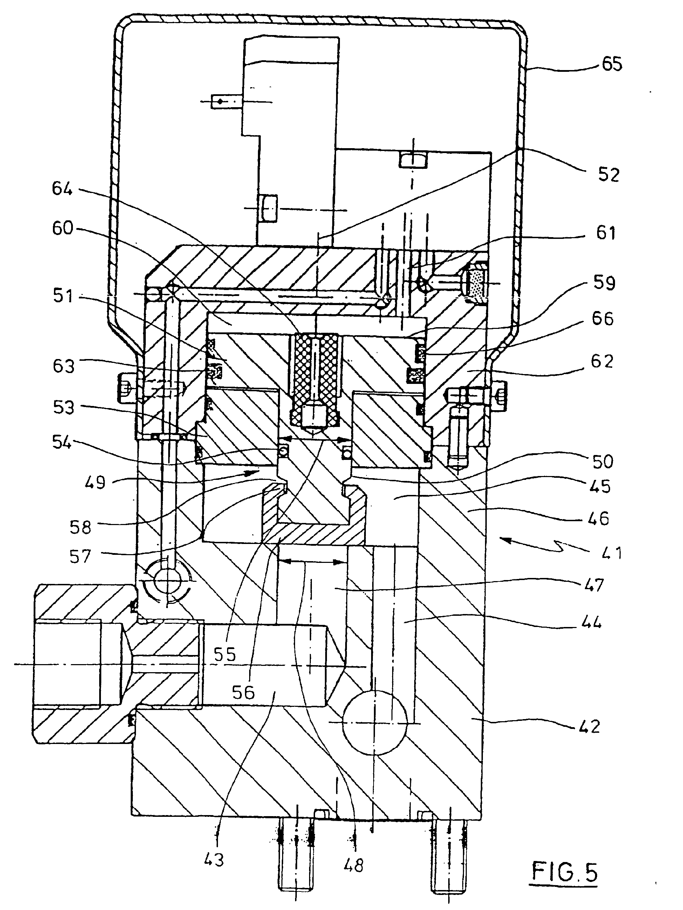

Fig. 5 zeigt einen Vertikalschnitt durch eine als ein Hochdruckventil (41) ausgebildete Vorrichtung zur pneumatischen Steuerung. In einem Ventilsockel (42) sind ein Zuleitungskanal (43) sowie ein Ableitungskanal (44) angeordnet, die in einen Zylinderinnenraum (45) einmünden, der zumindest bereichsweise von einer Zylinderwandung (46) des Ventilsockels (42) begrenzt ist. Im Bereich seiner dem zylinderinnenraum (45) zugewandten Ausdehnung stellt der Zuleitungskanal (43) einen Hauptströmungsweg (47) für den zu schaltenden Hochdruck mit einer Durchströmungsfläche (48) bereit.

Innerhalb des Zylinderinnenraumes (45) ist ein Steuerkolben (49) geführt, der im wesentlichen aus einem Kolbenschaft (50) und einem Kolbenkopf (51) ausgebildet ist. Der Kolbenschaft (50) und der Kolbenkopf (51) erstrecken sich im wesentlichen symmetrisch entlang einer Kolbenlängsachse (52) und bilden gemeinsam eine pilzartige Grundstruktur des Steuerkolbens (49) aus.

Der Kolbenschaft (50) erstreckt sich durch eine vom Ventilsockel (42) gehalterte Kolbenhülse (53) hindurch und ist relativ zur Kolbenhülse (53) mit einer Dichtung (54) abgedichtet. Die Dichtung (54) kann beispielsweise als ein O-Ring ausgebildet sein.

Der Kolbenschaft (50) weist eine Querschnittfläche (55) auf, die im wesentlichen gleich zur Durchströmungsfläche (48) dimensioniert ist. Bei der in Fig. 5 dargestellten Ausführungsform ist auf den Kolbenschaft (50) im Bereich dessen dem Kolbenkopf (51) abgewandten Ausdehnung eine Schaftkappe (56) aufgesetzt. Insbesondere ist daran gedacht, die Schaftkappe (56) mit einem Steg (57) in einer Nut (58) des Kolbenschaftes (50) zu haltern. In besonders einfacher Weise kann dies bei einer ausreichend elastischen Realisierung der Schaftkappe (56) in Form einer Schnappverbindung erfolgen.

Im Bereich seiner dem Kolbenschaft (50) abgewandten Ausdehnung weist der Kolbenkopf (51) eine Steuerfläche (59) auf, die von einem Steuerdruck zur Positionierung des Steuerkolbens (49) innerhalb des Zylinderinnenraumes (45) beaufschlagbar ist. Angrenzend zur Steuerfläche (59) erstreckt sich ein Steuerraum (60), in den eine Zuführleitung (61) für den Steuerdruck einmündet.

Der Steuerraum (60) wird bereichsweise von einem Zylinderkopf (62) begrenzt, der vom Ventilsockel (42) gehaltert ist. Relativ zu einer Innenwandung des Zylinderkopfes (62) ist der Kolbenkopf (51) von einer Dichtung (63) abgedichtet. Zur Gewährleistung einer Anschlagdämpfung bei einer Positionierung des Steuerkolbens (49) kann in den Kolbenkopf (51) ein Dämpfungselement (64) eingesetzt sein.

Zur Bereitstellung einer kompakten Ausführung ist es möglich, auf den Zylinderkopf (62) eine Zylinderhaube (65) oder einen Distanzbügel aufzusetzen, um den oberen Teil des Zylinderkopfes (62) vor mechanischen äußeren Belastungen zu schützen. Bei einer Konstruktion des Steuerkolbens (49) aus Metall werden zusätzlich zu den Dichtungen (54, 63) Führungselemente (66) aus Kunststoff oder ähnlichen weichen Materialien eingesetzt, um einen metallischen Kontakt zwischen dem Steuerkolben (49) und der in der Regel ebenfalls aus Metall ausgebildeten Zylinderwandung (46) beziehungsweise der Kolbenhülse (53) zu verhindern.

Fig. 5 zeigt das Hochdruckventil (41) in einem verschlossenen Zustand des Hauptströmungsweges (47). Der Kolbenschaft (50) ist hierbei mit der Schaftkappe (56) gegen die Umrandung des Hauptströmungsweges (47) geführt und dichtet den Zylinderinnenraum (45) gegenüber dem Hauptströmungsweg (47) ab. Im Bereich des Steuerraumes (60) liegt ein Steuerdruck an, der die Steuerfläche (59) beaufschlagt und eine auf den Steuerkolben (49) einwirkende Kraft erzeugt, die größer als die vom Hauptdruck auf die Schaftkappe (56) einwirkende Kraft dimensioniert ist. Hierdurch wird ein zuverlässiges Schließen des Hochdruckventils (41) gewährleistet. Bei einer Absenkung des Steuerdruckes wird der Steuerkolben (49) durch den einwirkenden Hochdruck in Richtung der Kolbenlängsachse (52) verschoben und der Hochdruck kann aus dem Hauptströmungsweg (47) durch den Zylinderinnenraum (47) hindurch in den Bereich des Ableitungskanals (44) übertreten. Das Hochdruckventil (41) befindet sich hierdurch in einem geöffneten Zustand.

Bei einem erneuten Anheben des Steuerdruckes kehrt der Steuerkolben (49) in die Ursprungsposition zurück und dichtet den Hauptströmungsweg (47) wieder ab. Aufgrund der im wesentlichen gleichen Dimensionierung der Querschnittfläche (55) des Kolbenschaftes (50) und der Durchströmungsfläche (48) des Hauptströmungsweges (47) wirken auf den Steuerkolben (49) sowohl in einem geöffneten Zustand als auch in einem geschlossenen Zustand des Hochdruckventils (41) bezogen auf den Hochdruck im wesentlichen die gleichen Kräfte ein. Für ein Schließen des Ventils sind hierdurch im wesentlichen die gleichen Steuerkräfte wie für die Ventilzuhaltung erforderlich.

Gemäß einer bevorzugten Ausführungsform ist daran gedacht, den Steuerkolben (49) mindestens bereichsweise aus einem Kunststoff auszubilden. Die Führungselemente (66) können dann entfallen. Darüber hinaus ist daran gedacht, den Kolbenschaft (50) und den Kolbenkopf (51) gemeinsam und einteilig aus dem gleichen Kunststoff zu realisieren. Verwendung kann dabei beispielsweise PETP finden. Bei einer metallischen Ausführung ist insbesondere an die Verwendung von Aluminium gedacht.

Für die Realisierung der Schaftkappe (56) wird ebenfalls bevorzugt ein Kunststoff verwendet. Auch hier ist beispielsweise an die Verwendung von PETP gedacht.

Gemäß einer typischen Dimensionierung bei einer Anwendung für die Schaltung von Blasdrücken wird der Kolbenkopf (51) mit einem Durchmesser von etwa 50mm versehen. Ein Durchmesser des Kolbenschaftes (50) beträgt typischerweise etwa 14mm bis 20mm, insbesondere etwa 18mm, ebenfalls beträgt ein Durchmesser der Durchströmungsfläche (48) typischerweise etwa 14mm bis 20mm insbesondere etwa 18mm. Bei einer derartigen Dimensionierung erweist sich in der Regel für die Schaltung eines Hauptdruckes von maximal 40 bar ein Steuerdruck von weniger als 10 bar als ausreichend.

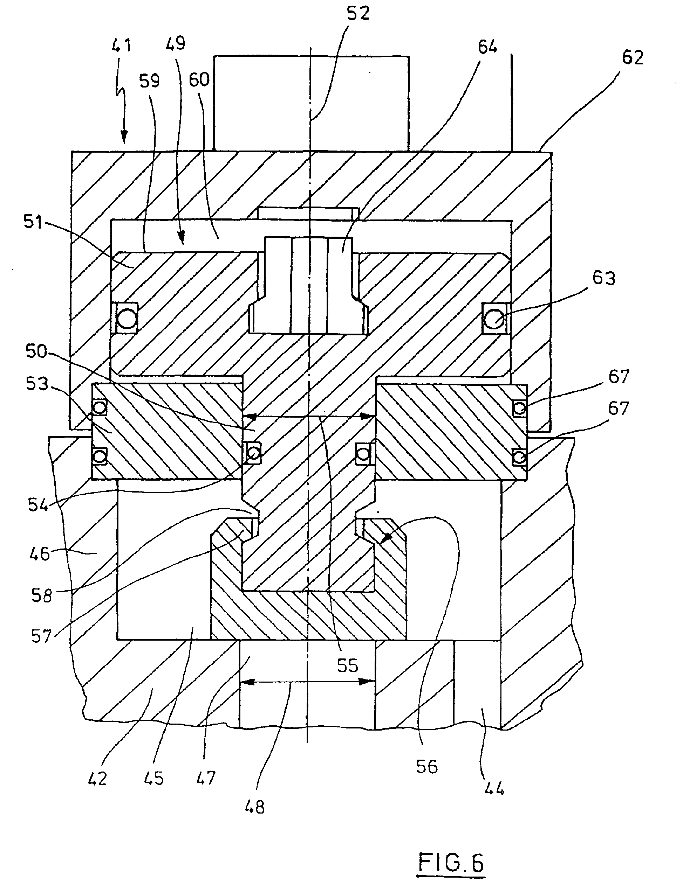

Fig. 6 zeigt eine teilweise Darstellung eines Längsschnittes durch ein Hochdruckventil (41) mit einem Steuerkolben (49), der aus Kunststoff ausgebildet ist. Der Steuerkolben (49) weist deshalb nur die Dichtungen (54, 63) auf und kann ohne Verwendung von Führungselementen (66) realisiert werden Aus Fig. 6 ist ebenfalls erkennbar, daß zur Gewährleistung einer hochwirksamen Abdichtung auch zwischen der Kolbenhülse (53) und dem Ventilsockel (42) beziehungsweise dem Zylinderkopf (62) Dichtungen (67) angeordnet sind. Die Dichtungen (67) können beispielsweise als O-Ringe realisiert sein.

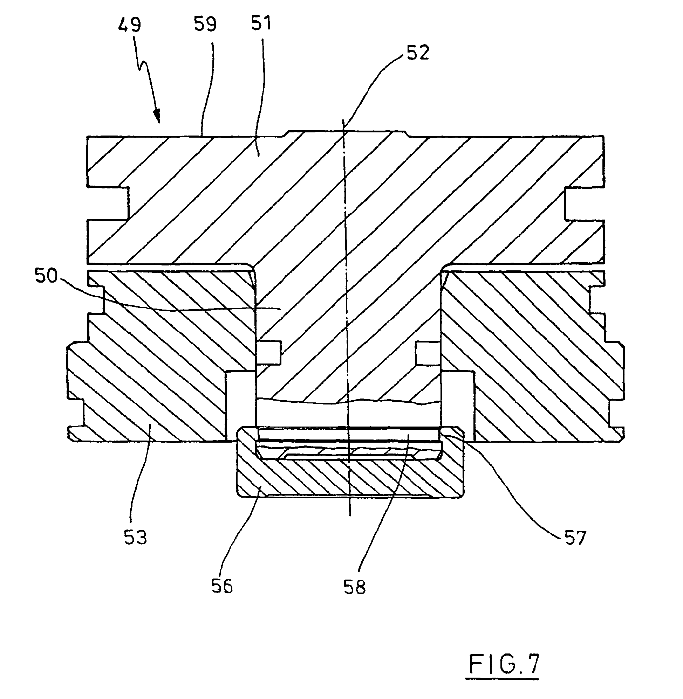

Fig. 7 veranschaulicht nochmals die Anordnung der Schaftkappe (56) im Bereich des Kolbenschaftes (50) sowie die Anordnung von nutförmigen Vertiefungen im Steuerkolben (49) und im Bereich der Kolbenhülse (53) zur Aufnahme der Dichtungen (54, 63, 67). Zur Ermöglichung einer geringen Dimensionierung des Zylinderinnenraumes (45) in Richtung der Kolbenlängsachse (52) ist bei der in Fig. 7 dargestellten Ausführungsform im Bereich der Kolbenhülse (53) eine Vertiefung (68) zur Aufnahme der Schaftkappe (56) in einem geöffneten Zustand des Hochdruckventils (41) angeordnet.

## Patentansprüche

1. vorrichtung zur pneumatischen Steuerung eines Blasdruckes bei der Herstellung von blasgeformten Behältern aus einem thermoplastischen Material, die einen in einem Zylinder geführten Steuerkolben (49) aufweist, der in Richtung einer Kolbenlängsachse (52) verschieblich gelagert ist und bei der durch den Zylinder hindurch ein vom Steuerkolben (49) verschließbarer Hauptströmungsweg (47) verläuft sowie bei der der Steuerkolben (49) mit einer Steuerfläche versehen ist, die einem Steuerraum (60) des Zylinders zugewandt ist und die zur Übertragung einer Steuerkraft auf den Steuerkolben (49) ausgebildet ist, **dadurch gekennzeichnet, daß** der Steuerkolben (49) einen Kolbenschaft (50) aufweist, dessen Querschnittfläche (55) im wesentlichen gleich einer Querschnittfläche einer vom Steuerkolben (49) verschließbaren und einem Zylinderinnenraum (45) zugewandten Durchströmungsfläche (48) des Hauptströmungsweges (47) dimensioniert ist **dadurch gekennzeichnet, daß** die Vorrichtung derart ausgestaltet ist, daß bei einer Absenkung des Steuerdruckes der Steuerkolben (49) allein durch den einwirkenden Hochdruck in Richtung der Kolbenlängsachse in der geoffneten Zustand verschoben wird.

2. Vorrichtung nach Anspruch 1, **dadurch gekennzeichnet, daß** der Steuerkolben (49) mindestens zweiteilig ausgebildet ist.

3. Vorrichtung nach Anspruch 1 oder 2, **dadurch gekennzeichnet, daß** der Steuerkolben (49) eine Schaftkappe (56) aufweist.

4. Vorrichtung nach einem der Ansprüche 1 bis 3, **dadurch gekennzeichnet, daß** die Schaftkappe (56) über eine Schnappverbindung im Bereich eines Kolbenschaftes (50) des Steuerkolbens (49) befestigt ist.

5. Vorrichtung nach einem der Ansprüche 1 bis 4, **dadurch gekennzeichnet, daß** der Kolbenschaft (50) eine Nut (58) zur Halterung der Schaftkappe (56) aufweist.

6. Vorrichtung nach einem der Ansprüche 1 bis 5, **dadurch gekennzeichnet, daß** die Schaftkappe (56) mit einem Steg (57) in die Nut (58) eingreift.

7. Vorrichtung nach einem der Ansprüche 1 bis 6, **dadurch gekennzeichnet, daß** die Schaftkappe (56) mindestens bereichsweise aus Kunststoff ausgebildet ist.

8. vorrichtung nach einem der Ansprüche 1 bis 7, **dadurch gekennzeichnet, daß** die Schaftkappe (56) mindestens bereichsweise aus PETP ausgebildet ist.

9. Vorrichtung nach einem der Ansprüche 1 bis 8, **dadurch gekennzeichnet, daß** im Bereich des Kolbenschaftes (50) mindestens eine Dichtung (54) angeordnet ist.

10. Vorrichtung nach einem der Ansprüche 1 bis 9, **dadurch gekennzeichnet, daß** die Steuerfläche (59) größer als die Querschnittfläche (55) des Kolbenschaftes (50) dimensioniert ist.

11. vorrichtung nach einem der Ansprüche 1 bis 10, **dadurch gekennzeichnet, daß** die Steuerfläche (59) im Bereich eines der Schaftkappe (56) abgewandt angeordneten Kolbenkopfes (51) positioniert ist.

12. Vorrichtung nach einem der Ansprüche 1 bis 11, **dadurch gekennzeichnet, daß** der Kolbenkopf (51) mit mindestens einer Dichtung (63) versehen ist.

13. Vorrichtung nach einem der Ansprüche 1 bis 12, **dadurch gekennzeichnet, daß** sowohl der Kolbenschaft (50) als auch der Kolbenkopf (51) mindestens bereichsweise aus Metall ausgebildet sind.

14. vorrichtung nach einem der Ansprüche 1 bis 12, **dadurch gekennzeichnet, daß** sowohl der Kolbenschaft (50) als auch der Kolbenkopf (51) mindestens bereichsweise aus Kunststoff ausgebildet sind.

15. Vorrichtung nach einem der Ansprüche 1 bis 12, **dadurch gekennzeichnet, daß** der Kolbenschaft (50) als auch der Kolbenkopf (51) mindestens bereichsweise aus PETP ausgebildet sind.

16. Vorrichtung nach einem der Ansprüche 1 bis 15, **dadurch gekennzeichnet, daß** von der Steuerfläche (59) mindestens bereichsweise ein Steuerraum (60) zur Zuleitung eines Steuerdruckes begrenzt ist.

17. Vorrichtung nach einem der Ansprüche 1 bis 16, **dadurch gekennzeichnet, daß** der Steuerkolben (49) als Anschlagdämpfung mit einem Dämpfungselement (64) versehen ist.

18. Vorrichtung nach einem der Ansprüche 1 bis 17, **dadurch gekennzeichnet, daß** der Steuerkolben (49) und der Zylinder im Bereich einer Steuereinrichtung einer mit Blasstationen (3) versehenen Blasmaschine angeordnet sind.

19. Vorrichtung nach Anspruch 18, **dadurch gekennzeichnet, daß** die Blasmaschine ein rotierendes Blasrad (25) aufweist.

## Claims

1. Device for pneumatically controlling a blowing pressure in the production of blow-moulded containers from a thermoplastic material, which device comprises a control piston (49) which is guided in a cylinder and mounted so as to be displaceable in the direction of a longitudinal axis (52) of the piston, and in which device a main flow path (47), which can be closed by the control piston (49), extends through the cylinder, and in which the control piston (49) is provided with a control area which faces a control space (60) of the cylinder and is formed to transmit a control force to the control piston (49), **characterised in that** the control piston (49) comprises a piston skirt (50) whose cross-sectional area (55) is dimensioned so as to be substantially equal to a cross-sectional area of a flow-through area (48), which can be closed by the control piston (49) and faces an interior cylinder space (45), of the main flow path (47), **characterised in that** the device is equipped such that, when the control pressure drops, the control piston (49) is displaced solely by the acting high pressure in the direction of the longitudinal axis of the piston into the open state.

2. Device according to Claim 1, **characterised in that** the control piston (49) is formed at least in two parts.

3. Device according to Claim 1 or 2, **characterised in that** the control piston (49) comprises a skirt cap (56).

4. Device according to any one of Claims 1 to 3, **characterised in that** the skirt cap (56) is fastened by means of a snap connection in the region of a piston skirt (50) of the control piston (49).

5. Device according to any one of Claims 1 to 4, **characterised in that** the piston skirt (50) comprises a groove (58) for retaining the skirt cap (56).

6. Device according to any one of Claims 1 to 5, **characterised in that** the skirt cap (56) engages by way of a leg (57) in the groove (58).

7. Device according to any one of Claims 1 to 6, **characterised in that** the skirt cap (56) is formed at least in certain regions from a plastics material.

8. Device according to any one of Claims 1 to 7, **characterised in that** the skirt cap (56) is formed at least in certain regions from PETP.

9. Device according to any one of Claims 1 to 8, **characterised in that** at least one seal (54) is disposed in the region of the piston skirt (50).

10. Device according to any one of Claims 1 to 9, **characterised in that** the control area (59) is dimensioned so as to be larger than the cross-sectional area (55) of the piston skirt (50) .

11. Device according to any one of Claims 1 to 10, **characterised in that** the control area (59) is positioned in the region of a piston head (51) which is remote from the skirt cap (56).

12. Device according to any one of Claims 1 to 11, **characterised in that** the piston head (51) is provided with at least one seal (63) .

13. Device according to any one of Claims 1 to 12, **characterised in that** both the piston skirt (50) and the piston head (51) are formed at least in certain regions from metal.

14. Device according to any one of Claims 1 to 12, **characterised in that** both the piston skirt (50) and the piston head (51) are formed at least in certain regions from a plastics material.

15. Device according to any one of Claims 1 to 12, **characterised in that** both the piston skirt (50) and the piston head (51) are formed at least in certain regions from PETP.

16. Device according to any one of Claims 1 to 15, **characterised in that** a control space (60) for supplying a control pressure is defined at least in certain regions by the control area (59).

17. Device according to any one of Claims 1 to 16, **characterised in that** the control piston (49) is provided with a damping element (64) as impact damping means.

18. Device according to any one of Claims 1 to 17, **characterised in that** the control piston (49) and the cylinder are disposed in the region of a control device of a blowing machine provided with blowing stations (3).

19. Device according to Claim 18, **characterised in that** the blowing machine comprises a rotating blowing wheel (25) .

## Revendications

1. Dispositif pour la commande pneumatique d'une pression de soufflage lors de la fabrication de conteneurs formés par soufflage à partir d'une matière thermoplastique, lequel présente un piston de commande (49) qui, guidé dans un cylindre, est monté déplaçable dans la direction d'un axe longitudinal (52) du piston, et dans lequel une voie pour le flux de courant principal (47), pouvant être fermée, traverse le cylindre, et dans lequel le piston de commande (49) est pourvu d'une surface de commande qui est orientée vers une chambre de commande (69) du cylindre et qui est conçue pour la transmission d'une force de commande au piston de commande (49), **caractérisé en ce que** le piston de commande (49) présente une tige de piston dont la section transversale (55) est sensiblement de dimensions égales à celles de la section transversale d'une surface de passage (48) de la voie pour le flux principal (47) qui peut être fermée par le piston de commande (49) et est orientée vers une chambre intérieure (45) du cylindre, et **en ce que** le dispositif est conçu de telle manière que, lors de la chute de la pression de commande, le piston de commande (49) est poussé dans la direction de l'axe longitudinal de piston, à l'état ouvert, par la seule haute pression active.

2. Dispositif selon la revendication 1, **caractérisé en ce que** le piston de commande (49) est composé de deux pièces au moins.

3. Dispositif selon la revendication 1 ou 2, **caractérisé en ce que** le piston de commande (49) présente un capuchon de tige (56).

4. Dispositif selon l'une des revendications 1 à 3, **caractérisé en ce que** le capuchon de tige (56) est fixé dans la région d'une tige de piston (50) du piston de commande (49) par assemblage à encliquetage.

5. Dispositif selon l'une des revendications 1 à 4, **caractérisé en ce que** la tige de piston (50) présente une rainure (58) pour maintenir le capuchon de tige (56) .

6. Dispositif selon l'une des revendications 1 à 5, **caractérisé en ce que** le capuchon de tige (56) s'engage dans la rainure (58) avec une patte (57).

7. Dispositif selon l'une des revendications 1 à 6, **caractérisé en ce que** le capuchon de tige (56) est réalisé, au moins en partie, en matière synthétique.

8. Dispositif selon l'une des revendications 1 à 7, **caractérisé en ce que** le capuchon (56) de la tige est réalisé, au moins en partie, en PEP.

9. Dispositif selon l'une des revendications 1 à 8, **caractérisé en ce que**, dans la région de la tige de piston (50) est agencé au moins un joint d'étanchéité (54).

10. Dispositif selon l'une des revendications 1 à 9, **caractérisé en ce que** la surface de commande (59) est plus grande que la section transversale (55) de la tige de piston (50).

11. Dispositif selon l'une des revendications 1 à 10, **caractérisé en ce que** la surface de commande (59) est positionnée dans la région d'une tête de piston (51) orientée à l'opposé du capuchon (56) de la tige.

12. Dispositif selon l'une des revendications 1 à 11, **caractérisé en ce que** la tête de piston (51) est pourvue d'au moins un joint d'étanchéité (63).

13. Dispositif selon l'une des revendications 1 à 12, **caractérisé en ce que** la tige de piston (50) tout comme la tête de piston (51) sont exécutées, au moins en partie, en métal.

14. Dispositif selon l'une des revendications 1 à 12, **caractérisé en ce que** la tige de piston (50) tout comme la tête de piston (51) sont exécutées, au moins en partie, en matière synthétique.

15. Dispositif selon l'une des revendications 1 à 12, **caractérisé en ce que** la tige de piston (50) tout comme la tête de piston (51) sont exécutées, au moins en partie, en PETP.

16. Dispositif selon l'une des revendications 1 à 15, **caractérisé en ce qu'**une chambre de commande (60) pour la fourniture d'une pression de commande est limitée, au moins en partie, par la surface de commande (59).

17. Dispositif selon l'une des revendications 1 à 16, **caractérisé en ce que** le piston de commande (49) est pourvu, en tant qu'amortissement de butée, d'un élément d'amortissement (64).

18. Dispositif selon l'une des revendications 1 à 17, **caractérisé en ce que** le piston de commande (49) et le cylindre sont disposés dans le domaine d'un dispositif de commande d'une machine de soufflage pourvue de postes de soufflage (3).

19. Dispositif selon la revendication 18, **caractérisé en ce que** la machine de soufflage présente une tourelle de soufflage (25) rotative.
